# EUROPÄISCHE PATENTSCHRIFT

(11) **EP 3 181 216 B1**
(45) Veröffentlichungstag und Bekanntmachung des Hinweises auf die Patenterteilung: **27.06.2018**
(21) Anmeldenummer: 16201114.2
(22) Anmeldetag: 29.11.2016
(51) Int. Cl.: B01F 7/16, B01F 15/00, B01F 7/00, G01N 11/14

(54) **LABORMISCHER UND VERFAHREN ZUM MISCHEN EINES MEDIUMS**
LABORATORY MIXER AND METHOD FOR MIXING A MATERIAL
MÉLANGEUR DE LABORATOIRE ET PROCÉDÉ POUR MÉLANGER UNE MATÉRIAU

(30) Priorität: 15.12.2015 DE 102015225274
(43) Veröffentlichungstag der Anmeldung: 21.06.2017
(73) Patentinhaber: KNIELE GmbH, 88422 Bad Buchenau (DE); Universität Stuttgart, 70174 Stuttgart (DE)
(72) Erfinder: KNIELE, Harald, 88422 Bad Buchenau (DE); KNIELE, Alexander, 88422 Bad Buchenau (DE); BAUMERT, Christian, 73760 Ostfildern (DE); GARRECHT, Harald, 76297 Stutensee (DE)
(74) Vertreter: Prüfer & Partner mbB Patentanwälte · Rechtsanwälte

(56) Entgegenhaltungen:
- WO-A1-2014/167503
- DE-A1-102007 036 523
- DE-A1-102008 055 179
- US-A- 4 878 377
- US-A- 5 549 384

## Beschreibung

Die vorliegende Erfindung bezieht sich auf einen Labormischer, bei welchem während oder kurz nach Abschluss des Mischvorgangs die rheologischen Eigenschaften von Medien erfasst werden können, um hieraus relevante Charakteristika zu bestimmen.

Besonders in der Betonindustrie ist eine Vorhersage von Eigenschaften von vermischten Medien äußerst wichtig, da die Bandbreite der Anforderungen an Betone in den vergangenen Jahrzehnten stetig gestiegen ist. Daher werden Betone nicht mehr als Drei-Phasen-Werkstoff aus Zement, Wasser und Gesteinskörnungen, sondern als Fünf-Stoff-System gefertigt, wobei zusätzlich zu den drei genannten Phasen Zusatzstoffe und Zusatzmittel zum Einsatz kommen. Die für die unterschiedlichsten Anforderungen zu findende Zusammensetzung des Betons ist hierbei sehr komplex, und allein die Erfahrung von Handwerkern ist hierbei längst nicht mehr ausreichend.

In der Praxis ist es daher wichtig, Mischungen herzustellen, hierbei eine ausreichende Durchmischung der verschiedenen Phasen zu erzielen, und dann die rheologischen Eigenschaften der Mischungen zu bestimmen.

Eine Problematik kann hierbei auftreten, dass sich einzelne Phasen schnell wieder entmischen können. Außerdem kann es bei bestimmten Medien möglich sein, dass Mischungen ihre rheologischen Eigenschaften in Abhängigkeit von der Mischzeit ändern.

Aus DE 10 2008 055 179 A1 ist eine Farbmischvorrichtung bekannt, bei welcher sowohl ein Rührkörper als auch ein Viskosimeter zum Bestimmen der Farbviskosität vorgesehen ist.

Im Stand der Technik sind weiterhin verschiedene Labormischer bekannt, beispielsweise ein Mörtelmischer Typ Hobart oder ein Intensivmischer Typ Eirich. Jedoch besteht hier das Problem, dass diese Mischer für die Mischaufgabe zwar geeignet sind, jedoch für eine rheologische Messung ein Transfer in ein gesondertes Rheometer erfolgen muss.

Da in diesem Zeitraum Entmischung stattfinden kann, und durch die Umfüllung in ein anderes Gefäß zudem Änderungen der rheologischen Eigenschaften des Mischgutes auftreten können, können solche Vorgehensweisen keine zuverlässigen Aussagen über rheologische Eigenschaften liefern. Durch das Vorscheren der Probe und den eigentlichen Messvorgang im Rheometer sind Entmischungen unvermeidlich. Soll die Probe wiederholt vermessen werden, muss die Probe zuvor durch geeignete Maßnahmen wieder homogenisiert werden.

Es ist daher die Aufgabe der vorliegenden Erfindung, einen Labormischer sowie ein Verfahren zur Verfügung zu stellen, bei dem bei der Vermischung der zu mischenden Medien die rheologischen Eigenschaften von homogenen Gemischen erfasst werden können, um hieraus Rückschlüsse auf relevante Eigenschaften der fertig gemischten Mischungen zu bestimmen.

Diese Aufgabe wird durch einen Labormischer mit den Merkmalen gemäß Anspruch 1, sowie durch ein Verfahren gemäß Anspruch 8 sowie eine Verwendung gemäß der Ansprüche 13 und 15 gelöst. Weitere vorteilhafte Ausgestaltungen der Erfindung sind Gegenstand der abhängigen Ansprüche.

Die Erfindung beinhaltet einen Labormischer, bei welchem an den Antrieb wahlweise ein Mischwerkzeug oder eine Vorrichtung zur Rheologiemessung gekoppelt werden kann. Sowohl das Mischwerkzeug als auch die Vorrichtung zur Rheologiemessung bestehen aus einem inneren Werkzeug und einem äußeren Werkzeug.

Der Motor zum Antrieb des inneren Werkzeuges ist vorzugsweise ein Torquemotor (Synchronmotor) mit Direktantrieb. Er ist daher sowohl für den Mischvorgang als auch für die Rheologiemessung geeignet. Dieser Synchronmotor kann beispielsweise eine Nenndrehzahl von 500 UPM (Umdrehungen pro Minute) aufweisen.

Der Motor zum Antrieb des äußeren Werkzeuges hingegen ist vorzugsweise ein Motor mit Getriebeeinheit und Motorbremse.

Die vertikale Position der Antriebseinheit und des Behälters des Labormischers sind vorzugsweise durch einen weiteren Motor gegenseitig veränderbar, so dass die Werkzeuge entweder in das Mischgefäß hineingefahren oder aber aus diesem herausgefahren werden können.

Durch die Verwendung des Labormischers ist ein kombinierter Misch-Rheologiemessungsvorgang möglich. Unter Verwendung der Mischwerkzeuge sind Rheologiemessungen in relativen Einheiten (Drehzahl/Drehmoment) möglich. Da die Mischwerkzeuge äußerst einfach mit den Werkzeugen zur Rheologiemessung (mit definierten Oberflächen) austauschbar sind, können die rheologischen Eigenschaften auch in absoluten Einheiten (Pa / Pa·s) ermittelt werden. Hierbei kann vermieden werden, dass signifikante Entmischung nach dem Mischvorgang eintritt, bevor eine Rheologiemessung durchgeführt wird. Weiterhin ist eines der Werkzeuge zur Rheologiemessung so ausgestaltet, dass es ebenfalls für einen Mischvorgang bzw. ein Verhindern der Entmischung herangezogen werden kann, womit es möglich wird, dass kurz vor der Rheologiemessung das Mischgut nochmals umgewälzt wird, um einen möglichst genauen rheologischen Wert messen zu können, ohne dass dabei eventuelle Fehler durch beginnende Entmischung eine Rolle spielen.

Im Folgenden wird ein bevorzugtes Ausführungsbeispiel unter Bezugnahme auf die beigefügten Zeichnungen näher erläutert.
Fig. 1 zeigt eine Vorderansicht des Labormischers, wobei dieser hier in der Konfiguration zum Mischen dargestellt ist.
Fig. 2 zeigt eine Vorderansicht des Labormischers, wobei dieser hier in einer Konfiguration zur Rheologiemessung dargestellt ist.
Fig. 3 zeigt eine Querschnittansicht der Werkzeuge für die Rheologiemessung.
Fig. 4 zeigt eine Explosionsansicht der Werkzeuge für die Rheologiemessung.
Fig. 5 zeigt eine Gesamtansicht des Labormischers.

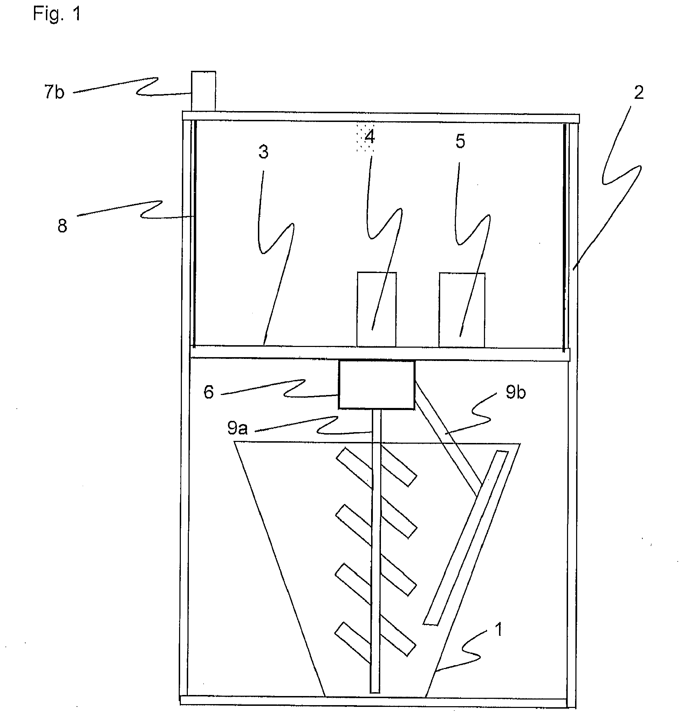

Wie in Fig. 1 gezeigt, weist der Labormischer ein Mischgefäß 1 auf, welches innerhalb einer Rahmenkonstruktion 2 angeordnet ist. Zum Verschluss des Mischbehälters 1 ist eine Deckelplatte 3 vorgesehen, welche in der vorliegenden Ausführungsform als Platte mit in der Rahmenkonstruktion 2 integriertem Mittelholm ausgebildet ist. Auf dieser Deckelplatte 3 sind der Torquemotor (Synchronmotor) 4 zum Antrieb eines Werkzeugs und ein weiterer Motor 5, aufweisend eine Getriebeeinheit mit Motorbremse, zum Antrieb des anderen Werkzeugs angeordnet. Auf der unteren Seite der Deckelplatte 3 ist eine Kupplungseinheit 6 vorgesehen, mit welcher ein Mischwerkzeug 9, bestehend aus innerem Mischwerkzeug 9a und äußerem Mischwerkzeug 9b, verbunden werden kann. Die Führungsschienen 8 dienen der vertikalen Führung der Deckelplatte 3, welche über einen Hub-Motor 7a (hier nicht gezeigt) sowie ein Spindelhubgetriebe 7b nach oben und unten vertikal bewegbar ist. Durch den Hub-Motor 7 kann daher die Position der Deckelplatte 3 mit Bezug auf den Mischbehälter 1 verändert werden, so dass der Mischbehälter 1 wahlweise offen oder durch die Deckelplatte 3 verschlossen sein kann. Im offenen Zustand, wie in Fig. 1 dargestellt, können die Mischwerkzeuge montiert oder vom System getrennt werden.

Im vorliegenden Fall ist ein inneres Mischwerkzeug 9a sowie ein äußeres Mischwerkzeug 9b mit der Kupplungseinheit 6 verbunden. Hierbei wird das innere Mischwerkzeug 9a vom Torquemotor (Synchronmotor) 4 angetrieben, wohingegen das äußere Mischwerkzeug 9b vom Motor 5 angetrieben wird. Ein Torquemotor (Synchronmotor) ist ein hochpoliger, elektrischer Direktantrieb aus der Gruppe der Langsamläufer.

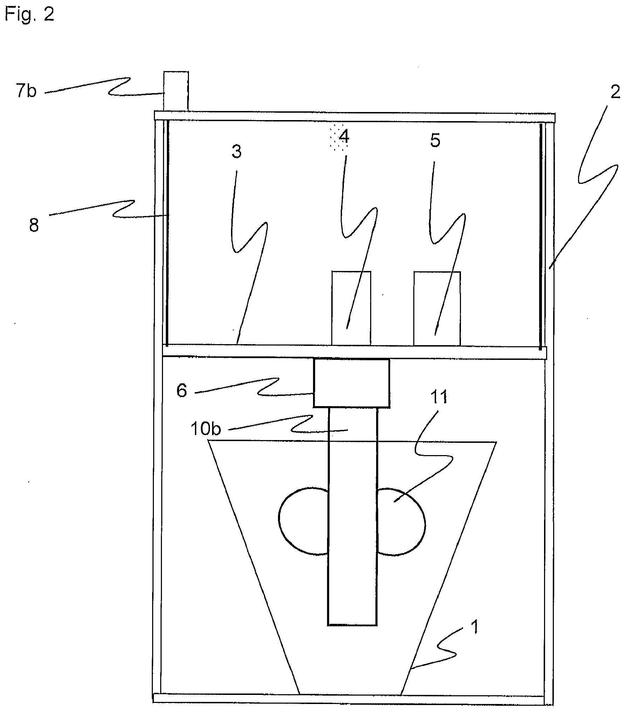

Fig. 2 zeigt eine Anordnung des Labormischers, in welcher allerdings nicht das Mischwerkzeug 9 mit der Kupplungseinheit 6 verbunden ist, sondern ein Werkzeug zur Rheologiemessung 10, bestehend aus einem inneren Werkzeug zur Rheologiemessung 10a und einem äußeren Werkzeug zur Rheologiemessung 10b.
In dieser Abbildung ist ein zylinderförmiges äußeres Werkzeug zur Rheologiemessung 10b zu erkennen, welches in der vorliegenden Ausführungsform mit Mischvorrichtungen 11 ausgestaltet ist, so dass es bei entsprechender Rotation das Mischgut im Mischbehälter 1 ebenfalls durchmischen kann bzw. eine Entmischung des vorher durchmischten Mischguts verhindern kann.

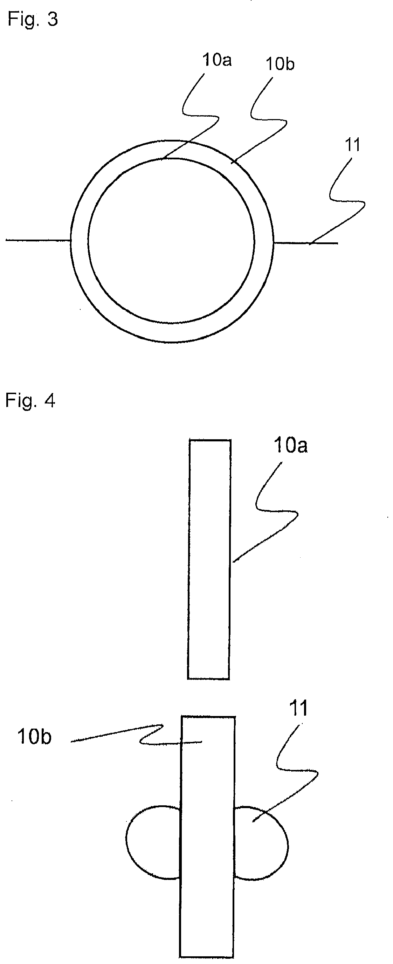

Fig. 3 zeigt eine Querschnittansicht des äußeren Werkzeugs zur Rheologiemessung 10b mit Mischvorrichtungen 11, wobei ein inneres Werkzeug zur Rheologiemessung 10a konzentrisch innerhalb des äußeren Werkzeugs zur Rheologiemessung 10b angeordnet ist. Durch diese Anordnung ist ein konstanter und über alle radialen Abschnitte gleicher Abstand zwischen innerem Werkzeug zur Rheologiemessung 10a und äußerem Werkzeugs zur Rheologiemessung 10b gegeben.

Wie in Fig. 4 gezeigt, besitzt das innere Werkzeug zur Rheologiemessung 10a mindestens ein zylinderförmiges Segment, wobei das zylinderförmige Segment einen kleineren Druchmesser besitzt als das äußere Werkzeug zur Rheologiemessung 10b. Sowohl das äußere Werkzeug zur Rheologiemessung 10b als auch das innere Werkzeug zur Rheologiemessung 10a haben geeignete Befestigungsmittel, mit welchen sie an der Kupplungseinheit 6 befestigt werden können.

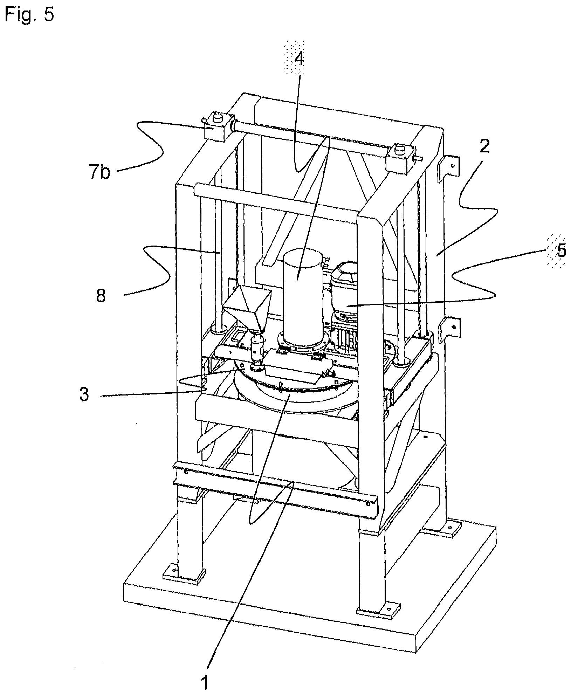

In Fig. 5 befindet sich die Deckelplatte 3 über dem Mischbehälter 1, es ist also ein verschlossener Zustand des Labormischers gezeigt. In dieser Abbildung ist nochmals der Antrieb der Deckelplatte 3 über die Führungsschienen und dem Hub-Motor 7 verdeutlicht.

Die vorliegende Ausführungsform stellt eine Kombination aus Mischer und Rheometer dar.

Durch die Verwendung eines Torquemotors (Synchronmotors) 4 zum Antrieb des inneren Werkzeugs ist eine hochgenaue Steuerung möglich, so dass auch Drehzahlen, welche nur knapp über Null sind, gefahren werden können. Gleichzeitig kann das dafür erforderliche Drehmoment sehr hoch sein. Der Vorteil eines solchen Torquemotors (Snychronmotors) 4 ist, dass keine Motorgetriebeeinheit notwendig ist, welche durch Schlupf Ungenauigkeiten, insbesondere bei der Rheologiemessung, hervorrufen könnte. Getriebeverluste können somit vermieden werden. Neben einem drehzahlgeführten Betrieb des Motors kann ebenfalls der rheologisch bevorzugte drehmomentgeführte Betrieb erfolgen. Der Direktantrieb ermöglicht zudem sehr schnelle Drehrichtungswechsel. Die aus der Rheologie bekannten oszillierenden Messungen werden somit ebenfalls im Labormischer möglich.

Die Kupplungseinheit 6 erlaubt, dass das innere Mischwerkzeug 9a und das äußere Mischwerkzeug 9b schnell gegen das innere Werkzeug zur Rheologiemessung 10a bzw. das äußere Werkzeug zur Rheologiemessung 10b ausgetauscht werden können. Dadurch, dass die Deckelplatte 3 verfahrbar ist, ihre vertikale Position also gegenüber dem Mischbehälter 1 ändern kann, ist eine Nullpunktsmessung mit den Rheologiewerkzeugen (inneres Werkzeug zur Rheologiemessung 10a und äußeres Werkzeug zur Rheologiemessung 10b) möglich.

Die Ausgestaltung des Labormischers ist nicht auf die beschriebene Ausführungsform beschränkt.

Die Formen des Mischwerkzeuges 9 und des Werkzeuges zur Rheologiemessung 10 sind hier nur exemplarisch dargestellt. Das innere Werkzeug zur Rheologiemessung 10a kann beispielsweise aus mehreren zylinderförmigen Segmenten mit verschiedenen Durchmessern bestehen. Weiterhin ist eine Kegelform oder Kegelstumpfform möglich. Ferner wäre noch andere rotationssymmetrische Formen möglich.

Ein Mischvorgang und eine anschließende Rheologiemessung werden beispielsweise nach folgendem Verfahren durchgeführt. Der Labormischer wird mit dem inneren Mischwerkzeug 9a und dem äußeren Mischwerkzeug 9b bestückt. Anschließend wird die Position der Deckelplatte 3 soweit nach unten verändert, dass die Deckelplatte 3 den Mischbehälter 1 abdeckt und somit das innere Mischwerkzeug 9a und das äußere Mischwerkzeug 9b im zu mischenden Medium eintauchen. Je nach zu mischendem Medium werden nun das innere Mischwerkzeug 9a und das äußere Mischwerkzeug 9b rotiert. Genügen dem Anwender rheologische Messungen mit relativen Einheiten, wird die Messung mit den Mischwerkzeugen (inneres Mischwerkzeug 9a und äußeres Mischwerkzeug 9b) durchgeführt. Sollen die rheologischen Messungen mit absoluten Einheiten bestimmt werden, wird die Deckelplatte 3 nach dem Mischvorgang wieder nach oben gefahren, so dass sie nicht mehr auf dem Mischbehälter 1 aufliegt. Das innere Mischwerkzeug 9a wird durch das innere Werkzeug zur Rheologiemessung 10a ersetzt, und das äußere Mischwerkzeug 9b wird durch das äußere Werkzeug zur Rheologiemessung 10b ausgetauscht.

Das innere Werkzeug zur Rheologiemessung 10a wird nun zur Bestimmung des Losbrechmomentes mit einer Drehzahl- oder Drehmomentrampe zum Rotieren gebracht. Bei dieser Messung wird das Drehmoment bzw. die Drehzahl bei geringstem Widerstand , also in Luft, bestimmt.

Nachdem diese Messung abgeschlossen ist und eine Auswertung der Daten erfolgt ist, wird die Deckelplatte 3 weiter nach unten verfahren, bis über die Bodenfläche des inneren Werkzeug zur Rheologiemessung 10a Kontakt mit dem Material hergestellt ist. Dann erfolgt eine Messung. Das Ergebnis dieser Messung und das vorher ermittelte Losbrechmoment werden bei der Auswertung des vollständig eingetauchten Messkörpers berücksichtigt.
Nun wird die Deckelplatte 3 weiter nach unten verfahren, so dass sie auf dem Mischbehälter 1 aufliegt. Das zylinderförmige Segment des inneren Werkzeugs zur Rheologiemessung 10a sollte komplett in das zu mischende Medium eintauchen. Anschließend wird durch den Motor 5 das äußere Werkzeug zur Rheologiemessung 10b rotiert. Die Mischvorrichtungen 11, welche am äußeren Werkzeug für die Rheologiemessung 10b vorgesehen sind, bewirken, dass sich das zu mischende Medium im Mischbehälter 1 vermischt und in den Bereich zwischen dem inneren Werkzeug zur Rheologiemessung 10a und dem äußeren Werkzeug zur Rheologiemessung 10b geleitet wird, und so keine Entmischung des zu mischenden Mediums eintritt. Nach einer frei zu wählenden Zeit wird die Drehung des äußeren Werkzeugs zur Rheologiemessung 10b gestoppt, und die Motorbremse wird im Motor 5 aktiviert. Anschließend wird das innere Werkzeug zur Rheologiemessung 10a ausgehend von einer sehr geringen Drehzahl oder einem sehr geringen Drehmoment durch den Torquemotor (Synchronmotor) 4 zum Rotieren gebracht (Ermittlung der Fließgrenze). Danach wird die Drehzahl bzw. das Drehmoment in mehreren Stufen erhöht und die zugehörigen Drehmomente bzw. die Drehzahlen ermittelt. Alternativ können oszillierende Messungen mit sehr schnellen Drehrichtungswechseln mit steigender Amplitude (Auslenkung oder Drehmoment) durchgeführt werden.

Anschließend wird die Deckelplatte 3 wieder nach oben gefahren, so dass die Werkzeuge zur Rheologiemessung 10a und 10b sowie der Mischhälter 1 gereinigt werden können.

Weiterhin wäre es möglich, dass während dem Rheologiemessvorgang zusätzlich zum inneren Werkzeug zur Rheologiemessung 10a auch das äußere Werkzeug zur Rheologiemessung 10b rotiert wird, allerdings mit einer anderen Geschwindigkeit als das innere Werkzeug zur Rheologiemessung 10a. Auch so ist eine Bestimmung der rheologischen Kennwerte möglich.

Weiterhin ist es noch möglich, vorliegendes System als Tribometer zu betreiben, wodurch die Pumpbarkeit von Beton simuliert werden soll. Die Messung von tribologischen Eigenschaften ist lediglich durch hohe Drehgeschwindigkeiten (vorzugsweise 10% - 120% der Nenndrehzahl des Torquemotors (Synchronmotors) 4) möglich. Deshalb müssen deutlich höhere Drehzahlen ausgewählt werden, und ein inneres Werkzeug zur Tribologiemessung 10a' kann mit dem Material der Pumprohre versehen sein. Schlupf ist hier also erwünscht, da er in der Pumpleitung ebenfalls anfällt.

Die vorliegende Erfindung betrifft einen Labormischer, in dem sowohl die Durchmischung des zu mischenden Mediums als auch eine Messung der rheologischen Eigenschaften des zu mischenden Mediums durchgeführt werden können. Hierbei sind ein Mischwerkzeug 9, bestehend aus einem inneren Mischwerkzeug 9a und einem äußeren Mischwerkzeug 9b, und ein Werkzeug zur Rheologiemessung 10, bestehend aus einem inneren Werkzeug zur Rheologiemessung 10a und einem äußeren Werkzeug zur Rheologiemessung 10b, leicht gegeneinander austauschbar. Die Deckelplatte 3 des Mischbehälters 1 kann dazu vertikal bewegt werden. Die inneren Werkzeuge 9a, 10a werden von einem Torquemotor (Synchronmotor) 4 angetrieben. Das äußere Werkzeug zur Rheologiemessung 10b verfügt zudem über Mischvorrichtungen 11, damit das zu mischende Medium unmittelbar vor der Rheologiemessung nochmals umgewälzt werden kann.

## Patentansprüche

1. Vorrichtung, welche zum Mischen und zur Rheologiemessung eines Mediumsgeeignet ist, aufweisend:
einen Mischbehälter (1), welcher dazu geeignet ist, in einer Rahmenkonstruktion (2) angeordnet zu werden,
eine Deckelplatte (3) zum Verschluss des Mischbehälters (1), auf deren Oberseite ein Synchronmotor (4) sowie ein weiterer Motor (5) angeordnet sind und an deren Unterseite eine Kupplungseinheit (6) angeordnet ist,
wobei die gegenseitige Position der Deckelplatte (3) und des Mischbehälters (1) vertikal veränderbar ist,
ein Mischwerkzeug (9) und ein Werkzeug zur Rheologiemessung (10), **dadurch gekennzeichnet, dass** an die Kupplungseinheit (6) wahlweise das Mischwerkzeug (9), bestehend aus einem inneren Mischwerkzeug (9a) und einem äußeren Mischwerkzeug (9b), oder das Werkzeug zur Rheologiemessung (10), bestehend aus einem inneren Werkzeug zur Rheologiemessung (10a) und einem äußeren Werkzeug zur Rheologiemessung (10b) gekoppelt werden kann, dass der Synchronmotor (4) dazu eingerichtet ist, das innere Mischwerkzeug (9a) oder das innere Werkzeug zur Rheologiemessung (10a) anzutreiben und der weitere Motor (5) dazu eingerichtet ist, das äußere Mischwerkzeug (9b) oder das äußere Werkzeug zur Rheologiemessung (10b) anzutreiben, und dass das äußere Werkzeug zur Rheologiemessung (10b) mindestens eine Mischvorrichtung (11) aufweist.

2. Vorrichtung gemäß Anspruch 1, wobei der Synchronmotor (4) ein Torquemotor ist.

3. Vorrichtung gemäß Anspruch 1 oder 2, aufweisend einen Hub-Motor (7), durch welchen die Deckelplatte (3) vertikal nach oben oder unten bewegbar ist.

4. Vorrichtung gemäß einem der vorhergehenden Ansprüche, wobei die obere vertikale Endposition der Deckelplatte (3) so ausgewählt ist, dass das Mischwerkzeug (9) oder das Werkzeug zur Rheologiemessung (10) sich oberhalb des Mischbehälters (1) befinden.

5. Vorrichtung gemäß einem der vorhergehenden Ansprüche, wobei der weitere Motor (5) eine Getriebeeinheit und eine Motorbremse aufweist.

6. Vorrichtung gemäß einem der vorhergehenden Ansprüche, wobei das innere Werkzeug zur Rheologiemessung (10a) mindestens ein zylinderförmiges Segment, vorzugsweise mehrere zylinderförmige Segmente mit unterschiedlichen Durchmessern, zur Rheologiemessung aufweist.

7. Vorrichtung gemäß einem der vorhergehenden Ansprüche, wobei das äußere Werkzeug zur Rheologiemessung (10b) im Westenlichen aus einem hohlen Zylinder besteht, wobei der Innendurchmesser dieses hohlen Zylinders größer ist als der Außendurchmesser des Segments mit dem größten Durchmesser des inneren Werkzeugs zur Rheologiemessung (10a).

8. Verfahren zum Mischen eines Mediums unter Verwendung der Vorrichtung gemäß einer der Ansprüche 1 bis 7, umfassend die folgenden Schritte:
a) Rühren des zu mischenden Mediums im Mischbehälter (1) unter Verwendung des inneren Mischwerkzeugs (9a) und des äußeren Mischwerkzeugs (9b);
b) Herausfahren des inneren Mischwerkzeugs (9a) und des äußeren Mischwerkzeugs (9b) aus dem Mischbehälter (1);
c) Ersetzen des inneren Mischwerkzeugs (9a) durch das innere Werkzeug zur Rheologiemessung (10a), Ersetzen des äußeren Mischwerkzeugs (9b) durch das äußere Werkzeug zur Rheologiemessung (10b);
d) Vertikales Absenken der Vorrichtung zur Rheologiemessung, bis das innere Werkzeug zur Rheologiemessung (10a) und das äußere Werkzeug zur Rheologiemessung (10b), welches stufenlos in das Material einfahrbar ist, so weit in das zu mischende Medium eintauchen, bis zylinderförmige Segmente des inneren Werkzeugs zur Rheologiemessung (10a) im Wesentlichen vollständig in das zu mischende Medium eintauchen;
e) Rotation des inneren Werkzeugs zur Rheologiemessung (10a) zur Aufnahme von rheologischen Werten.

9. Verfahren gemäß Anspruch 8, wobei nach Schritt d) das äußere Werkzeug zur Rheologiemessung (10b) rotiert wird, um eine Entmischung des zu mischenden Mediums vor der Rheologiemessung zu verhindern.

10. Verfahren gemäß Anspruch 8 oder 9, wobei vor Schritt e) die Motorbremse des Motors (5) aktiviert wird, um eine Bewegung des äußeren Werkzeugs zur Rheologiemessung (10b) während der Rheologiemessung zu vermeiden.

11. Verfahren gemäß Anspruch 8 oder 9, wobei in Schritt e) das äußere Werkzeug zur Rheologiemessung (10b) zusätzlich rotiert wird, wobei die Winkelgeschwindigkeit der Rotationsbewegung des äußeren Werkzeugs zur Rheologiemessung (10b) sich von der Winkelgeschwindigkeit der Rotationsbewegung des inneren Werkzeugs zur Rheologiemessung (10a) unterscheidet.

12. Verfahren gemäß einem der Ansprüche 8 - 11, wobei vor Schritt d) eine Messung des Losbrechmomentes ohne Kontakt des inneren Werkzeugs zur Rheologiemessung (10a) und des äußeren Werkzeug zur Rheologiemessung (10b) mit dem zu mischenden Medium, und wahlweise eine Messung, bei der nur die Bodenfläche des inneren Werkzeugs zur Rheologiemessung (10a) Kontakt mit dem zu vermessenden Material besitzt, durchgeführt wird.

13. Verwendung der Vorrichtung gemäß einem der Ansprüche 1 bis 7 oder des Verfahrens gemäß einem der Ansprüche 8 bis 12 für einen Mischvorgang und eine Rheologiemessung.

14. Verwendung gemäß Anspruch 13 bei der Herstellung von Beton.

15. Verwendung der Vorrichtung gemäß einem der Ansprüche 1 bis 7 für eine Tribologiemessung, wobei ein inneres Werkzeug zur Tribologiemessung (10a') als Messkörper verwendet wird und vorzugsweise mit Drehzahlen zwischen 10% und 120% der Nenndrehzahl des Synchronmotors (4) rotiert wird.

## Claims

1. Device which is suitable for mixing and for rheology measurement of a medium, comprising:
a mixing container (1), which is suitable to be positioned in a frame construction (2), a cover plate (3) for closing the mixing container (1), on the upper side of which a synchronous motor (4) and a further motor (5) are provided and on the lower side of which a clutch device (6) is provided,
wherein the mutual position of the cover plate (3) and the mixing container (1) can be changed in a vertical direction,
a mixing tool (9) and a tool for measuring rheology (10), **characterized in that**
either the mixing tool (9), consisting of an inner mixing tool (9a) and an outer mixing tool (9b), or the tool for measuring rheology (10), consisting of an inner tool for measuring rheology (10a) and an outer tool for measuring rheology (10b) can be coupled to the clutch device (6),
and that the synchronous motor (4) is adapted to drive either the inner mixing device (9a) or the inner tool for measuring rheology (10a) and the further motor is adapted to drive either the outer mixing tool (9b) or the outer tool for measuring rheology (10b), and that the outer tool for measuring rheology (10b) at least comprises a mixing device (11).

2. Device according to claim 1, wherein the synchronous motor (4) is a torque motor.

3. Device according to claim 1 or 2, comprising a hoist motor (7) by which the cover plate (3) can be moved vertically upwards or downwards.

4. Device according to one of the previous claims, wherein the upper vertical end position of the cover plate (3) is selected in a way that the mixing tool (9) or the tool for measuring rheology (10) are above the mixing container (1).

5. Device according to one of the previous claims, wherein the further motor (5) comprises a gear unit and a motor break.

6. Device according to one of the previous claims, wherein the inner tool for measuring rheology (10a) comprises at least one cylindrical segment, preferably multiple cylindrical segments with different diameters, for measuring rheology.

7. Device according to one of the previous claims, wherein the outer tool for measuring rheology (10b) essentially consists of a hollow cylinder, wherein the inner diameter of this hollow cylinder is larger than the outer diameter of the segment with the largest diameter of the inner tool for measuring rheology (10a).

8. Process for mixing of a medium using a device according to one of claims 1 to 7, comprising the following steps:
a) stirring of the medium to be mixed in the mixing container (1) using the inner mixing tool (9a) and the outer mixing tool (9b);
b) driving the inner mixing tool (9a) and the outer mixing tool (9b) out of the mixing container (1);
c) substituting of the inner mixing tool (9a) by the inner tool for measuring rheology (10a), substituting of the outer mixing tool (9b) by the outer tool for measuring rheology (10b);
d) vertical lowering of the device for measuring rheology until the inner tool for measuring rheology (10a) and the outer tool for measuring rheology (10b), which can be driven into the material without steps, emerge into the medium to be mixed to an extent, until cylindrical segments of the inner tool for measuring rheology (10a) essentially completely emerge into the medium to be mixed;
e) rotation of the inner tool for measuring rheology (10a) for recording of rheological values.

9. Process according to claim 8, wherein after step d), the outer tool for measuring rheology (10b) is rotated in order to prevent a segregation of the medium to be mixed prior to the rheology measurement.

10. Process according to claim 8 or 9, wherein prior to step e), the motor break of the motor (5) is activated in order to prevent a movement of the outer tool for measuring rheology (10b) during the rheology measurement.

11. Process according to claim 8 or 9, wherein in step e) the outer tool for measuring rheology (10b) is additionally rotated, wherein the angular velocity of the rotation movement of the outer tool for measuring rheology (10b) differs from the angular velocity of the rotation movement of the inner tool for measuring rheology (10a).

12. Process according to one of claims 8 to 11, wherein prior to step d) a measurement of the breakaway torque without contact of the inner tool for measuring rheology (10a) and the outer tool for measuring rheology (10b) with the medium to be mixed is performed, and optionally a measurement is performed, for which only the bottom area of the inner tool for measuring rheology (10a) is in contact with the material to be measured.

13. Use of the device according to one of claims 1 to 7 or the process according to one of claims 8 to 12 for a mixing process and a measurement of rheology.

14. Use according to claim 13 during the production of concrete.

15. Use of the device according to one of claims 1 to 7 for measurement of tribology, wherein an inner tool for measuring tribology (10a') is used as measuring barb and preferably is rotated with rotation numbers between 10% and 120% of the nominal speed of the synchronous motor (4).

## Revendications

1. Dispositif qui est approprié au mélange et à la mesure rhéologique d'un fluide, présentant :
un récipient de mélange (1) qui est approprié afin d'être disposé dans une construction de cadre (2),
une plaque de couvercle (3) pour la fermeture du récipient de mélange (1), sur le côté supérieur duquel un moteur synchrone (4) ainsi qu'un autre moteur (5) sont disposés et sur le côté inférieur duquel une unité de couplage (6) est disposée,
dans lequel la position mutuelle de la plaque de couvercle (3) et du récipient de mélange (1) peut être modifiée verticalement,
un outil de mélange (9) et un outil pour la mesure rhéologique (10),
**caractérisé en ce que**
au choix l'outil de mélange (9), se composant d'un outil de mélange (9a) intérieur et d'un outil de mélange (9b) extérieur, ou l'outil pour la mesure rhéologique (10), se composant d'un outil intérieur pour la mesure rhéologique (10a) et d'un outil extérieur pour la mesure rhéologique (10b) peut être couplé à l'unité de couplage (6),
que le moteur synchrone (4) est aménagé afin d'entraîner l'outil de mélange (9a) intérieur ou l'outil intérieur pour la mesure rhéologique (10a) et l'autre moteur (5) est aménagé afin d'entraîner l'outil de mélange (9b) extérieur ou l'outil extérieur pour la mesure rhéologique (10b) ;
et que l'outil extérieur pour la mesure rhéologique (10b) présente au moins un dispositif de mesure (11).

2. Dispositif selon la revendication 1, dans lequel le moteur synchrone (4) est un moteur couple.

3. Dispositif selon la revendication 1 ou 2, présentant un moteur de levage (7) par lequel la plaque de couvercle (3) peut être déplacée verticalement vers le haut ou le bas.

4. Dispositif selon l'une quelconque des revendications précédentes, dans lequel la position d'extrémité verticale supérieure de la plaque de couvercle (3) est sélectionnée de sorte que l'outil de mélange (9) ou l'outil pour la mesure rhéologique (10) se trouve au-dessus du récipient de mélange (1).

5. Dispositif selon l'une quelconque des revendications précédentes, dans lequel l'autre moteur (5) présente une unité d'engrenage et un frein moteur.

6. Dispositif selon l'une quelconque des revendications précédentes, dans lequel l'outil intérieur pour la mesure rhéologique (10a) présente au moins un segment cylindrique, de préférence plusieurs segments cylindriques avec différents diamètres, pour la mesure rhéologique.

7. Dispositif selon l'une quelconque des revendications précédentes, dans lequel l'outil extérieur pour la mesure rhéologique (10b) se compose sensiblement d'un cylindre creux, dans lequel le diamètre intérieur de ce cylindre creux est supérieur au diamètre extérieur du segment avec le plus grand diamètre de l'outil intérieur pour la mesure rhéologique (10a).

8. Procédé de mélange d'un fluide en utilisant le dispositif selon l'une quelconque des revendications 1 à 7, comprenant les étapes suivantes :
a) le brassage du fluide à mélanger dans le récipient de mélange (1) en utilisant l'outil de mélange (9a) intérieur et l'outil de mélange (9b) extérieur ;
b) la sortie de l'outil de mélange (9a) intérieur et de l'outil de mélange (9b) extérieur du récipient de mélange (1) ;
c) le remplacement de l'outil de mélange (9a) intérieur par l'outil intérieur pour la mesure rhéologique (10a), le remplacement de l'outil de mélange (9b) extérieur par l'outil extérieur pour la mesure rhéologique (10b) ;
d) l'abaissement vertical du dispositif pour la mesure rhéologique jusqu'à ce que l'outil intérieur pour la mesure rhéologique (10a) et l'outil extérieur pour la mesure rhéologique (10b) qui peut être entré en continu dans le matériau pénètrent dans le fluide à mélanger jusqu'à ce que des segments cylindriques de l'outil intérieur pour la mesure rhéologique (10a) pénètrent sensiblement complètement dans le fluide à mélanger ;
e) la rotation de l'outil intérieur pour la mesure rhéologique (10a) pour la réception de valeurs rhéologiques.

9. Procédé selon la revendication 8, dans lequel après l'étape d), l'outil extérieur pour la mesure rhéologique (10b) est tourné afin d'empêcher une dissociation du fluide à mélanger avant la mesure rhéologique.

10. Procédé selon la revendication 8 ou 9, dans lequel avant l'étape e), le frein moteur du moteur (5) est activé afin d'éviter un mouvement de l'outil extérieur pour la mesure rhéologique (10b) pendant la mesure rhéologique.

11. Procédé selon la revendication 8 ou 9, dans lequel dans l'étape e) l'outil extérieur pour la mesure rhéologique (10b) est en outre tourné, dans lequel la vitesse angulaire du mouvement de rotation de l'outil extérieur pour la mesure rhéologique (10b) se distingue de la vitesse angulaire du mouvement de rotation de l'outil intérieur pour la mesure rhéologique (10a).

12. Procédé selon l'une quelconque des revendications 8 à 11, dans lequel avant l'étape d) une mesure du couple initial de décollement sans contact de l'outil intérieur pour la mesure rhéologique (10a) et de l'outil extérieur pour la mesure rhéologique (10b) avec le fluide à mélanger, et au choix une mesure pour laquelle seule la surface au sol de l'outil intérieur pour la mesure rhéologique (10a) possède un contact avec le matériau à mesurer, est réalisée.

13. Utilisation du dispositif selon l'une quelconque des revendications 1 à 7 ou du procédé selon l'une quelconque des revendications 8 à 12 pour un processus de mélange et une mesure rhéologique.

14. Utilisation selon la revendication 13 lors de la fabrication de béton.

15. Utilisation du dispositif selon l'une quelconque des revendications 1 à 7 pour une mesure tribologique, dans laquelle un outil intérieur pour la mesure tribologique (10a') est utilisé en tant que corps de mesure et de préférence est tourné avec des vitesses de rotation entre 10 % et 120 % de la vitesse de rotation nominale du moteur synchrone (4).
